# EUROPEAN PATENT APPLICATION

(11) **EP 4 446 787 A1**
(43) Date of publication of application: **16.10.2024**
(21) Application number: 23755642.8
(22) Date of filing: 06.01.2023
(51) Int. Cl.: G02B 6/12

(54) **OPTICAL DEVICE, OPTICAL MODULE, AND COMMUNICATION DEVICE**

(30) Priority: 18.02.2022 CN 202210149493
(71) Applicant: Huawei Technologies Co., Ltd., Shenzhen, Guangdong 518129 (CN)
(72) Inventor: QIU, Zhicheng, Shenzhen, Guangdong 518129 (CN); TANG, Xiaofeng, Shenzhen, Guangdong 518129 (CN); XIAO, Pengcheng, Shenzhen, Guangdong 518129 (CN)
(74) Representative: Isarpatent
(86) International application number: PCT/CN2023/070964
(87) International publication number: WO 2023/155638

(57) **Abstract**

This application provides an optical component, an optical module, and a communication device. The optical component includes a chip, a fiber array unit, and at least one fastening member. The fiber array unit is located on a side of the chip, the fiber array unit includes at least one optical fiber, at least one waveguide is disposed on a surface of the chip, and matching glue is filled between an end face of the waveguide and an end face of the optical fiber. One end of the fastening member is bonded to the chip by using fastening glue, and the other end is bonded to the fiber array unit by using the fastening glue. Bonding strength of the fastening glue is greater than bonding strength of the matching glue. In embodiments of this application, the two types of glue, the matching glue and the fastening glue, are disposed, so that a requirement on each type of glue is reduced, and a coupling requirement between the optical fiber and the waveguide can be easily met, to improve product reliability and reduce a loss.

## Description

### CROSS-REFERENCE TO RELATED APPLICATIONS

This application claims priority to Chinese Patent Application No. 202210149493.X, filed with the China National Intellectual Property Administration on February 18, 2022 and entitled "OPTICAL COMPONENT, OPTICAL MODULE, AND COMMUNICATION DEVICE", which is incorporated herein by reference in its entirety.

### TECHNICAL FIELD

This application relates to the field of communication technologies, and in particular, to an optical component, an optical module, and a communication device.

### BACKGROUND

The continuous growth of global data communication promotes the continuous development of silicon-based photonics, especially the wide application and development of a high-speed and high-bandwidth optical transceiver module based on the silicon-based photonics. To achieve better performance and a smaller size, optical component packaging gradually develops towards compact ball grid array (Ball Grid Array, BGA) packaging, such as 2D, 2.5D, and 3D.

Inside an optical component, coupling between a fiber array unit (Fiber Array Unit, FAU) and a waveguide array may be implemented by evanescent wave coupling, grating coupling, side coupling, or the like. A loss of the side coupling is smaller than losses of other coupling manners. A single type of glue may be used to bond an optical fiber in the fiber array unit and a waveguide in the waveguide array, to implement the side coupling between the fiber array unit and the waveguide array. However, in a related technology, requirements of the side coupling for a low refractive index, high bonding strength, and high temperature resistance are difficult to be met by using a single type of glue.

### SUMMARY

Embodiments of this application provide an optical component, an optical module, and a communication device, to resolve a problem that requirements of the side coupling for a low refractive index, high bonding strength, and high temperature resistance are difficult to be met by using a single type of glue.

According to a first aspect, an embodiment of this application provides an optical component. The optical component may include a chip, a fiber array unit, and at least one fastening member. The fiber array unit is located on a side of the chip, and the fiber array unit includes at least one optical fiber. At least one waveguide is disposed on a surface of the chip, and matching glue is filled between an end face of the waveguide and an end face of the optical fiber. One end of the fastening member is bonded to the chip by using fastening glue, and the other end is bonded to the fiber array unit by using the fastening glue. Bonding strength of the fastening glue is greater than bonding strength of the matching glue.

In the optical component provided in this embodiment of this application, the matching glue is filled between the end face of the waveguide and the end face of the optical fiber, so that mode field diameter matching can be implemented between the waveguide and the optical fiber. In addition, the fiber array unit can be firmly bonded to the chip by using the fastening member and the fastening glue, to fasten a position of the fiber array unit. In this way, the matching glue only needs to meet requirements for refractive index matching between the optical fiber and the waveguide and high temperature resistance, and the fastening glue only needs to meet requirements for high bonding strength and high temperature resistance. The two types of glue, the matching glue and the fastening glue, are disposed, so that a requirement on each type of glue is reduced, and a coupling requirement between the optical fiber and the waveguide can be easily met, to improve product reliability and reduce a loss.

In an actual process, both the matching glue and the fastening glue are cured after being dispensed, or the curing glue may be dispensed and cured first, and then the matching glue is dispensed and cured. A process sequence is not limited herein.

In a possible implementation, a plurality of waveguides may be disposed on the surface of the chip, the plurality of waveguides may form a waveguide array, and the plurality of waveguides in the waveguide array may be disposed side by side. The fiber array unit may include a plurality of optical fibers disposed side by side. Each optical fiber may correspond to one waveguide. The end face of the waveguide may be disposed at an edge of the chip, and the fiber array unit is located on a side face of the chip, so that the waveguide is coupled to the corresponding optical fiber. During a specific implementation, quantities of the waveguides and the optical fibers may be set based on an actual requirement. This is not limited herein.

In this embodiment of this application, the matching glue is filled between the end face of the waveguide and the end face of the optical fiber. To avoid a case in which the matching glue affects an effect of an optical signal transmitted between the waveguide and the optical fiber, and enable a refractive index of the waveguide to match a refractive index of the optical fiber, a refractive index of the matching glue may be set to be less than the refractive index of the waveguide. In a possible implementation, a material of the waveguide may be silicon dioxide, in other words, a refractive index of the waveguide is approximately 1.44, and a refractive index of the matching glue may be less than 1.44. For example, a material of the matching glue may be silicone. Certainly, the matching glue may alternatively be made of another material. This is not limited herein.

During a specific implementation, to implement mode field diameter matching between the waveguide and the optical fiber, mode field diameter expansion is performed on the waveguide. Optionally, the end face of the waveguide may be disposed in a suspended (Under-cut, U cut) manner. For example, a plurality of recesses may be disposed on the end face of the waveguide, the matching glue may fill the recesses on the end face of the waveguide, so that an insertion loss of the waveguide is low, and a requirement on a material of the waveguide is reduced.

In a possible implementation, the end of the fastening member is bonded to the chip by using the fastening glue, and the other end is bonded to the fiber array unit by using the fastening glue. The fastening member increases a bonding area between the fiber array unit and the chip, and the bonding strength of the fastening glue is greater than the bonding strength of the matching glue. Therefore, a position of the fiber array unit may be fastened by disposing the fastening member and the fastening glue. During a specific implementation, to make the position of the fiber array unit firm, a material of the fastening member may be a hard material, and the fastening glue may be a hard material after being cured. For example, the material of the fastening member may include glass, and the fastening glue may include epoxy glue. Certainly, the fastening member and the fastening glue may alternatively be made of other materials. This is not limited herein. In this embodiment of this application, the matching glue may include silica gel. Compared with the fastening glue, the material of the matching glue is relatively soft. In a manufacturing or use process of the optical component, because the fastening member and the fastening glue may firmly fasten the position of the fiber array unit, a stress generated after the matching glue undergoes thermal expansion does not affect the position of the fiber array unit, and the matching glue does not crack, to ensure a good coupling effect of the optical fiber and the waveguide. In addition, the matching glue and the fastening glue can withstand a high temperature of a reflow process. For example, the matching glue and the fastening glue can withstand a high temperature of over 260°C.

In this embodiment of this application, the optical component may be packaged in a ball grid array packaging manner. The optical component may include a plurality of channels. For example, the optical component may be a three-channel coherent component. The chip may include: a substrate, components such as a single-chip microcomputer module, a drive module, a processing module, and a capacitor that are located on the substrate, and a solder ball located on a back face of the substrate.

In some embodiments of this application, the fastening glue and the matching glue that are bonded to the fiber array unit are located on different surfaces of the fiber array unit. For example, the fastening glue may be located on an upper surface of the fiber array unit, and the matching glue may be located on the end face of the fiber array unit. The fastening glue and the matching glue that are bonded to the chip are located on different surfaces of the chip. For example, the fastening glue may be located on the upper surface of the chip, and the matching glue may be located on a side face of the chip. In this way, the fastening glue and the matching glue are not mixed, and mutual impact between the fastening glue and the matching glue after the fastening glue and the matching glue are mixed is avoided, to ensure high bonding strength of the fastening glue and a good optical matching effect of the matching glue.

In a possible implementation, the fastening member may be located on a same side of the chip and the fiber array unit, the end of the fastening member is bonded to the surface of the chip, the other end is bonded to a first surface of the fiber array unit, and the first surface of the fiber array unit is parallel to the surface of the chip. For example, the fastening member may be located on an upper side of the chip and the fiber array unit, in other words, the first surface may be the upper surface of the fiber array unit. In this way, the end of the fastening member is bonded to a position where the waveguide on the surface of the chip is located, so that the fastening member is disposed above the chip and the fiber array unit, and does not occupy extra space, to facilitate encapsulation of the optical component.

A part of the fiber array unit exceeds the surface of the chip. A first thickness of the fastening member is greater than a second thickness of the fastening member, where the first thickness is a thickness, in a first direction, of the end that is of the fastening member and that is bonded to the chip, the second thickness is a thickness, in the first direction, of the end that is of the fastening member and that is bonded to the fiber array unit, and the first direction is a direction perpendicular to the surface of the chip. A difference between the first thickness and the second thickness is approximately a height of the fiber array unit that exceeds the chip. In other words, in a cross section perpendicular to the surface of the chip, the fastening member may be in a shape. Certainly, the fastening member may alternatively be in another shape. This is not limited herein.

In another possible implementation, fastening member is located on different sides of a chip and a fiber array unit, one end of the fastening member is bonded to a surface of the chip, the other end is bonded to a second surface of the fiber array unit, and the second surface of the fiber array unit is not parallel to the surface of the chip. In other words, the second surface may be a side face of the fiber array unit. For example, the fastening member is located on an upper surface side of the chip, the fastening member is located on the side face of the fiber array unit, and the end of the fastening member that is bonded to the surface of the chip is not located at a position of a waveguide. In other words, the fastening member is disposed on the upper surface of the chip, and the fastening member does not occupy extra space, to facilitate packaging of the optical component.

In a possible implementation, a first width of the fastening member is greater than a second width of the fastening member, where the first width is a width, in a second direction, of the end that is of the fastening member and that is bonded to the fiber array unit, the second width is a width, in the second direction, of the end that is of the fastening member and that is bonded to the chip, and the second direction is a direction perpendicular to an extension direction of the fiber array unit and parallel to the surface of the chip. In other words, in a cross section parallel to the surface of the chip, the fastening member may be in an L shaped. Certainly, the fastening member may alternatively be in another shape. This is not limited herein.

In some other embodiments of this application, fastening glue and matching glue may alternatively be located on a same surface of a fiber array unit (or a chip). In a possible implementation, the fastening member may be located on a surface of the chip at a position corresponding to the fiber array unit. A part of an end face of the fiber array unit facing the chip is bonded to the fastening member, and another part is bonded to a side face of the chip by using the fastening glue. The fastening member does not occupy additional space, to facilitate packaging of the optical component. The fastening member is bonded to a surface of the chip by using the fastening glue, and the fastening member is bonded to a part of the end face of the fiber array unit by using the fastening glue. To avoid glue mixing, the fastening glue and the matching glue on the end face of the fiber array unit need to be disposed with an interval, and the fastening glue on the surface of the chip and the matching glue on the side face of the chip need to be disposed with an interval. During a specific implementation, the fastening member may be in a square shape or a cuboid shape, or the fastening member may be in another shape. This is not limited herein.

In specific implementation, the fiber array unit may include: a first protection board and a second protection board, where each optical fiber in the fiber array unit is located between the first protection board and the second protection board, the first protection board is located on a side that is of the optical fiber and that is away from the chip, the second protection board is located on a side that is of the optical fiber and that is close to the chip, and the first protection board and the second protection board may protect the optical fiber. The optical fiber in the fiber array unit is flush with the waveguide on the surface of the chip, so that the optical fiber is coupled to the waveguide by using the matching glue. The end of the fastening member is bonded to the chip by using the fastening glue, and the other end is bonded to a side face of the first protection board by using the fastening glue. Because the first protection board exceeds the surface of the chip, the fastening member is bonded to the first protection board, so that a position of the fiber array unit is more easily fastened. In addition, the fastening member is disposed on the upper surface of the chip, so that the fastening member does not occupy extra space, to facilitate packaging of the optical component.

According to a second aspect, an embodiment of this application further provides an optical module. The optical module may include any one of the foregoing optical components and a housing, where the housing wraps the optical component. In a possible implementation, the optical module may further include components such as a connector and an optical fiber ribbon. Because the fiber array unit is bonded by using two types of glue: matching glue and fastening glue in the foregoing optical component, and a coupling effect between an optical fiber and a waveguide is good, the optical module including the optical component has high reliability and a low loss.

According to a third aspect, an embodiment of this application further provides a communication device. The communication device may include any one of the foregoing optical modules and a power module, where the power module is configured to supply power to the optical module. Alternatively, the communication device may include any one of the foregoing optical components and a housing, where the housing wraps the optical component. The fiber array unit is bonded by using two types of glue: matching glue and fastening glue in the foregoing optical component, and a coupling effect between an optical fiber and a waveguide is good, a communication device including the optical component has high reliability and a low loss. The communication device may be a telecommunication equipment room, a data center, a router, a switch, a server, or the like. Certainly, the optical component may also be used in another type of communication device. This is not limited herein.

### BRIEF DESCRIPTION OF DRAWINGS

FIG. 1 is a side view of a structure of an optical component according to an embodiment of this application;
FIG. 2 is a top view of a structure of an optical component according to an embodiment of this application;
FIG. 3 is a diagram of a structure of an end face of a waveguide according to an embodiment of this application;
FIG. 4 is a partial diagram of viewing the waveguide in a direction shown by the arrow Pin FIG. 3;
FIG. 5 is a cross-sectional diagram of a chip according to an embodiment of this application;
FIG. 6 is another top view of a structure of an optical component according to an embodiment of this application;
FIG. 7 is another side view of a structure of an optical component according to an embodiment of this application; and
FIG. 8 is a diagram of a structure of an optical module according to an embodiment of this application.

Reference numerals:
11-Chip; Ill-Substrate; 112-Single-chip microcomputer module; 113-Drive module; 114-Processing module; 115-Capacitor; 116-Solder ball; 12-Fiber array unit; 121-Optical fiber; 122-First protection board; 123-Second protection board; 13-fastening member; 14-Waveguide array; 141-Waveguide; 15-Matching glue; 16-Fastening glue; 21-Housing; 22-Connector; 23-Optical fiber ribbon; U-Recess; S1-First surface; Fl-First direction; F2-Second direction; hl-First thickness; h2-Second thickness; dl-First width; and d2-Second width.

### DESCRIPTION OF EMBODIMENTS

To make the objectives, technical solutions, and advantages of this application clearer, the following further describes this application in detail with reference to the accompanying drawings.

It should be noted that same reference signs in the accompanying drawings of this application represent same or similar structures, and therefore repeated descriptions thereof are omitted. Expressions of positions and directions in this application are described by using the accompanying drawings as examples. However, changes may also be made as required, and all the changes fall within the protection scope of this application. The accompanying drawings in this application are merely used to illustrate relative position relationships and do not represent an actual scale.

In a related technology, inside an optical component, an optical fiber in a fiber array unit is bonded with a waveguide in a waveguide array by using glue, to implement side coupling between the fiber array unit and the waveguide array. To ensure that the optical fiber is firmly bonded to the waveguide, glue with high bonding strength is required. In a ball grid array packaging process, an optical component is assembled on a circuit board by using a surface mount (Surface Mounted Technology, SMT) technology. In a high-temperature reflow process of the SMT technology, the entire optical component needs to be placed in a reflow oven, and the optical component and the circuit board are firmly soldered with a high temperature of over 260°C. Consequently, the glue bonded between the fiber array unit and the waveguide array needs to withstand a high temperature of over 260°C. In addition, to avoid a definite mode field diameter mismatch between the optical fiber and the waveguide, mode field diameter expansion needs to be performed on the waveguide, and glue with a low refractive index is filled between the optical fiber and the waveguide. Consequently, the glue bonded between the fiber array unit and the waveguide array needs to meet at least requirements for a low refractive index, high bonding strength, and high temperature resistance. In the related technology, the requirements for a low refractive index, high bonding strength, and high temperature resistance are difficult to be met by using a single type of glue. As a result, after the optical component is reflowed at a high temperature, a definite defect occurs on a bonding surface between the fiber array unit and the waveguide array, the bonding strength is greatly reduced, and product reliability is low and a loss is large.

Based on this, to resolve the problem that requirements for a low refractive index, high bonding strength, and high temperature resistance are difficult to meet by using a single type of glue, embodiments of this application provide an optical component, an optical module, and a communication device. The optical component may be used in various types of communication devices. For example, the communication device may be a telecommunication equipment room, a data center, a router, a switch, a server. Certainly, the optical component may also be used in another type of communication device. This is not limited herein.

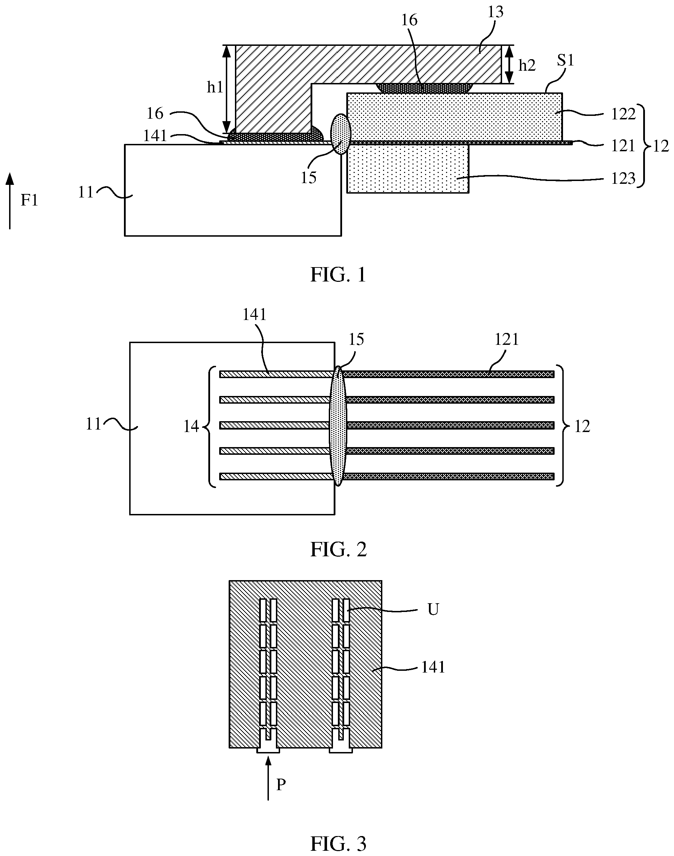

FIG. 1 is a side view of a structure of an optical component according to an embodiment of this application. As shown in FIG. 1, the optical component provided in this embodiment of this application may include a chip 11, a fiber array unit 12, and at least one fastening member 13. The fiber array unit 12 is located on a side of the chip 11, and the fiber array unit 12 includes at least one optical fiber 121. At least one waveguide 141 is disposed on a surface of the chip 11, and matching glue 15 is filled between an end face of the waveguide 141 and an end face of the optical fiber 121. One end of the fastening member 13 is bonded to the chip 11 by using fastening glue 16, and the other end is bonded to the fiber array unit 12 by using the fastening glue 16. Bonding strength of the fastening glue 16 is greater than bonding strength of the matching glue 15.

In the optical component provided in this embodiment of this application, the matching glue is filled between the end face of the waveguide and the end face of the optical fiber, so that mode field diameter matching can be implemented between the waveguide and the optical fiber. In addition, the fiber array unit can be firmly bonded to the chip by using the fastening member and the fastening glue, to fasten a position of the fiber array unit. In this way, the matching glue only needs to meet requirements for refractive index matching between the optical fiber and the waveguide and high temperature resistance, and the fastening glue only needs to meet requirements for high bonding strength and high temperature resistance. The two types of glue, the matching glue and the fastening glue, are disposed, so that a requirement on each type of glue is reduced, and a coupling requirement between the optical fiber and the waveguide can be easily met, to improve product reliability and reduce a loss.

In an actual process, both the matching glue and the fastening glue are cured after being dispensed, or the curing glue may be dispensed and cured first, and then the matching glue is dispensed and cured. A process sequence is not limited herein.

FIG. 2 is a top view of a structure of an optical component according to an embodiment of this application. As shown in FIG. 2, a plurality of waveguides 141 may be disposed on the surface of the chip 11, the plurality of waveguides 141 may form a waveguide array 14, and the plurality of waveguides 141 in the waveguide array 14 may be disposed side by side. The fiber array unit 12 may include a plurality of optical fibers 121 disposed side by side. Each optical fiber 121 may correspond to one waveguide 141. The end face of the waveguide 141 may be disposed at an edge of the chip 11, and the fiber array unit 12 is located on a side face of the chip 11, so that the waveguide 141 is coupled to the corresponding optical fiber 121. In FIG. 2, for example, the waveguide array 14 includes five waveguides 141, and the fiber array unit 12 includes five optical fibers 121. During a specific implementation, quantities of the waveguides 141 and the optical fibers 121 may be set based on an actual requirement. This is not limited herein.

As shown in FIG. 1 and FIG. 2, the matching glue 15 is filled between the end face of the waveguide 141 and the end face of the optical fiber 121. To avoid a case in which the matching glue 15 affects an effect of an optical signal transmitted between the waveguide 141 and the optical fiber 121, and enable a refractive index of the waveguide 141 to match a refractive index of the optical fiber 121, a refractive index of the matching glue 15 may be set to be less than the refractive index of the waveguide 141. In a possible implementation, a material of the waveguide 141 may be silicon dioxide, in other words, a refractive index of the waveguide 141 is approximately 1.44, and a refractive index of the matching glue 15 may be less than 1.44. For example, a material of the matching glue 15 may be silicone. Certainly, the matching glue 15 may alternatively be made of another material. This is not limited herein.

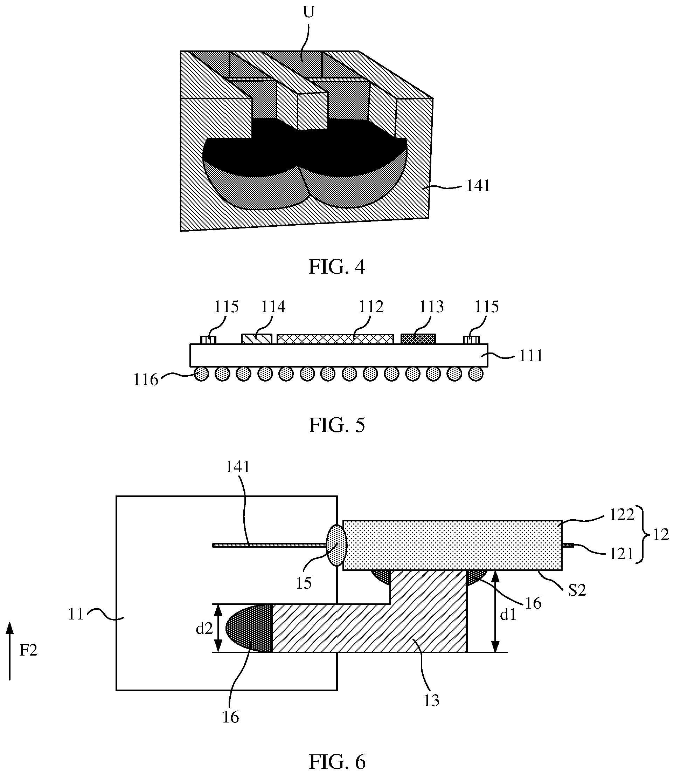

FIG. 3 is a diagram of a structure of an end face of a waveguide according to an embodiment of this application. FIG. 4 is a partial diagram of viewing the waveguide in a direction shown by the arrow P in FIG. 3. As shown in FIG. 3 and FIG. 4, to implement mode field diameter matching between the waveguide 141 and the optical fiber, mode field diameter expansion is performed on the waveguide 141. Optionally, the end face of the waveguide 141 may be disposed in a suspended (Under-cut, U cut) manner. For example, a plurality of recesses U may be disposed on the end face of the waveguide 141, the matching glue may fill the recesses U on the end face of the waveguide 141, so that an insertion loss of the waveguide 141 is low, and a requirement on a material of the waveguide 141 is reduced.

As shown in FIG. 1, the end of the fastening member 13 is bonded to the chip 11 by using the fastening glue 16, and the other end is bonded to the fiber array unit 12 by using the fastening glue 16. The fastening member 13 increases a bonding area between the fiber array unit 12 and the chip 11, and the bonding strength of the fastening glue 16 is greater than the bonding strength of the matching glue 15. Therefore, a position of the fiber array unit 12 may be fastened by disposing the fastening member 13 and the fastening glue 16. During a specific implementation, to make the position of the fiber array unit 12 firm, a material of the fastening member 13 may be a hard material, and the fastening glue 16 may be a hard material after being cured. For example, the material of the fastening member 13 may include glass, and the fastening glue 16 may include epoxy glue. Certainly, the fastening member 13 and the fastening glue 16 may alternatively be made of other materials. This is not limited herein. In this embodiment of this application, the matching glue 15 may include silica gel. Compared with the fastening glue 16, the material of the matching glue 15 is relatively soft. In a manufacturing or use process of the optical component, because the fastening member 13 and the fastening glue 16 may firmly fasten the position of the fiber array unit 12, a stress generated after the matching glue 15 undergoes thermal expansion does not affect the position of the fiber array unit 12, and the matching glue 15 does not crack, to ensure a good coupling effect of the optical fiber 121 and the waveguide 141. In addition, the matching glue 15 and the fastening glue 16 can withstand a high temperature of a reflow process. For example, the matching glue 15 and the fastening glue 16 can withstand a high temperature of over 260°C.

In this embodiment of this application, the optical component may be packaged in a ball grid array packaging manner. The optical component may include a plurality of channels. For example, the optical component may be a three-channel coherent component. FIG. 5 is a cross-sectional diagram of a chip according to an embodiment of this application. As shown in FIG. 5, the chip may include a substrate 111, components such as a single-chip microcomputer module 112, a drive module 113, a processing module 114, and a capacitor 115 that are located on the substrate 111, and a solder ball 116 located on a back face of the substrate 111.

Still refer to FIG. 1. In some embodiments of this application, the fastening glue 16 and the matching glue 15 that are bonded to the fiber array unit 12 are located on different surfaces of the fiber array unit 12. For example, in FIG. 1, the fastening glue 16 is located on an upper surface of the fiber array unit 12, and the matching glue 15 is located on the end face of the fiber array unit 12. The fastening glue 16 and the matching glue 15 that are bonded to the chip 11 are located on different surfaces of the chip 11. For example, in FIG. 1, the fastening glue 16 is located on the upper surface of the chip 11, and the matching glue 15 is located on a side face of the chip 11. In this way, the fastening glue 16 and the matching glue 15 are not mixed, and mutual impact between the fastening glue 16 and the matching glue 15 after the fastening glue 16 and the matching glue 15 are mixed is avoided, to ensure high bonding strength of the fastening glue 16 and a good optical matching effect of the matching glue 15.

As shown in FIG. 1, in a possible implementation, the fastening member 13 may be located on a same side of the chip 11 and the fiber array unit 12, the end of the fastening member 13 is bonded to the surface of the chip 11, the other end is bonded to a first surface S1 of the fiber array unit 12, and the first surface S 1 of the fiber array unit 12 is parallel to the surface of the chip 11. For example, in FIG. 1, the fastening member 13 is located on an upper side of the chip 11 and the fiber array unit 12, in other words, the first surface S1 may be the upper surface of the fiber array unit 12. In this way, the end of the fastening member 13 is bonded to a position where the waveguide 141 on the surface of the chip 11 is located, so that the fastening member 13 is disposed above the chip 11 and the fiber array unit 12, and does not occupy extra space, to facilitate encapsulation of the optical component.

Still refer to FIG. 1. A part of the fiber array unit 12 exceeds the surface of the chip 11. A first thickness h1 of the fastening member 13 is greater than a second thickness h2 of the fastening member 13, where the first thickness h1 is a thickness, in a first direction F1, of the end that is of the fastening member 13 and that is bonded to the chip 11, the second thickness h2 is a thickness, in the first direction F1, of the end that is of the fastening member 13 and that is bonded to the fiber array unit 12, and the first direction F1 is a direction perpendicular to the surface of the chip 11. A difference between the first thickness h1 and the second thickness h2 is approximately a height of the fiber array unit 12 that exceeds the chip 11. In other words, in the cross section shown in FIG. 1, the fastening member 13 may be in an L shape. Certainly, the fastening member 13 may alternatively be in another shape. This is not limited herein.

FIG. 6 is another top view of a structure of an optical component according to an embodiment of this application. As shown in FIG. 6, in another possible implementation, fastening member 13 is located on different sides of a chip 11 and a fiber array unit 12, one end of the fastening member 13 is bonded to a surface of the chip 11, the other end is bonded to a second surface S2 of the fiber array unit 12, and the second surface S2 of the fiber array unit 12 is not parallel to the surface of the chip 11. In other words, the second surface S2 may be a side face of the fiber array unit 12. For example, in FIG. 6, the fastening member 13 is located on an upper surface side of the chip 11, the fastening member 13 is located on the side face of the fiber array unit 12, and the end of the fastening member 13 that is bonded to the surface of the chip 11 is not located at a position of a waveguide 141. In other words, the fastening member 13 is disposed on the upper surface of the chip 11, and the fastening member 13 does not occupy extra space, to facilitate packaging of the optical component.

Still refer to FIG. 6. A first width d1 of the fastening member 13 is greater than a second width d2 of the fastening member 13, where the first width d1 is a width, in a second direction F2, of the end that is of the fastening member 13 and that is bonded to the fiber array unit 12, the second width d2 is a width, in the second direction F2, of the end that is of the fastening member 13 and that is bonded to the chip 11, and the second direction F2 is a direction perpendicular to an extension direction of the fiber array unit 12 and parallel to the surface of the chip 11. In other words, in the cross section shown in FIG. 6, the fastening member 13 may be in an L shape. Certainly, the fastening member 13 may alternatively be in another shape. This is not limited herein. It may be understood that, to clearly show the components in the optical component, FIG. 6 shows only one waveguide 141 and one optical fiber 121. During a specific implementation, quantities of the waveguides 141 and the optical fibers 121 may be set based on an actual requirement. This is not limited herein.

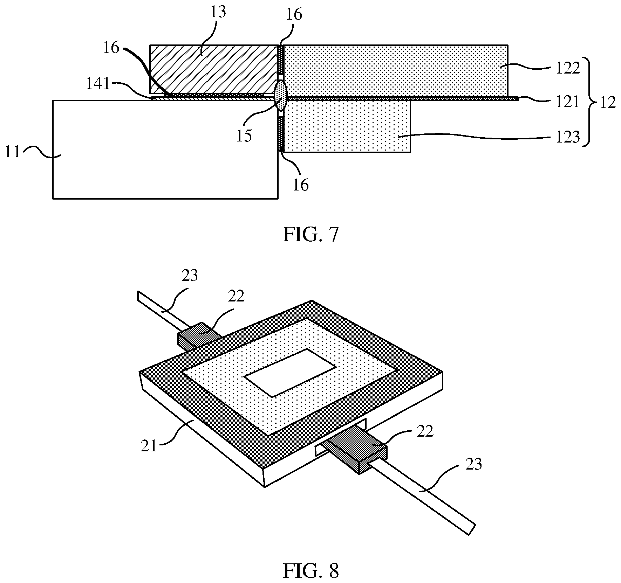

FIG. 7 is another side view of a structure of an optical component according to an embodiment of this application. As shown in FIG. 7, in some other embodiments of this application, fastening glue 16 and matching glue 15 may alternatively be located on a same surface of a fiber array unit 12 (or a chip 11). In a possible implementation, the fastening member 13 may be located on a surface of the chip 11 at a position corresponding to the fiber array unit 12. A part of an end face of the fiber array unit 12 facing the chip 11 is bonded to the fastening member 13, and another part is bonded to a side face of the chip 11 by using the fastening glue 16. The fastening member 13 does not occupy additional space, to facilitate packaging of the optical component. The fastening member 13 is bonded to a surface of the chip 11 by using the fastening glue 16, and the fastening member 13 is bonded to a part of the end face of the fiber array unit 12 by using the fastening glue 16. To avoid glue mixing, the fastening glue 16 and the matching glue 15 on the end face of the fiber array unit 12 need to be disposed with an interval, and the fastening glue 16 on the surface of the chip 11 and the matching glue 15 on the side face of the chip 11 need to be disposed with an interval. During a specific implementation, the fastening member 13 may be in a square shape or a cuboid shape, or the fastening member 13 may be in another shape. This is not limited herein.

During a specific implementation, as shown in FIG. 1, the fiber array unit 12 may include: a first protection board 122 and a second protection board 123, where each optical fiber 121 in the fiber array unit 12 is located between the first protection board 122 and the second protection board 123, the first protection board 122 is located on a side that is of the optical fiber 121 and that is away from the chip 11, the second protection board 123 is located on a side that is of the optical fiber 121 and that is close to the chip 11, and the first protection board 122 and the second protection board 123 may protect the optical fiber 121. The optical fiber 121 in the fiber array unit 12 is flush with the waveguide 141 on the surface of the chip 11, so that the optical fiber 121 is coupled to the waveguide 141 by using the matching glue 15. The end of the fastening member 13 is bonded to the chip 11 by using the fastening glue 16, and the other end is bonded to a side face of the first protection board 122 by using the fastening glue 16. Because the first protection board 122 exceeds the surface of the chip 11, the fastening member 13 is bonded to the first protection board 122, so that a position of the fiber array unit 12 is more easily fastened. In addition, the fastening member 13 is disposed on the upper surface of the chip 11, so that the fastening member 13 does not occupy extra space, to facilitate packaging of the optical component.

According to a same technical concept, an embodiment of this application further provides an optical module. FIG. 8 is a diagram of a structure of an optical module according to an embodiment of this application. As shown in FIG. 8, the optical module provided in this embodiment of this application may include any one of the foregoing optical components (not shown in the figure) and a housing 21, where the housing 21 wraps the optical component. In a possible implementation, the optical module may further include components such as a connector 22 and an optical fiber ribbon 23. Because the fiber array unit is bonded by using two types of glue: matching glue and fastening glue in the foregoing optical component, and a coupling effect between an optical fiber and a waveguide is good, the optical module including the optical component has high reliability and a low loss.

According to a same technical concept, an embodiment of this application further provides a communication device. The communication device may include any one of the foregoing optical modules and a power module, where the power module is configured to supply power to the optical module. Alternatively, the communication device may include any one of the foregoing optical components and a housing, where the housing wraps the optical component. The fiber array unit is bonded by using two types of glue: matching glue and fastening glue in the foregoing optical component, and a coupling effect between an optical fiber and a waveguide is good, a communication device including the optical component has high reliability and a low loss. The communication device may be a telecommunication equipment room, a data center, a router, a switch, a server, or the like. Certainly, the optical component may also be used in another type of communication device. This is not limited herein.

Although preferred embodiments of this application are described, persons skilled in the art can make changes and modifications to these embodiments after they learn of a basic inventive concept. Therefore, the following claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. In this case, this application is intended to cover these modifications and variations of embodiments of this application provided that they fall within the scope of the following claims and their equivalent technologies.

## Claims

1. An optical component, comprising a chip, a fiber array unit, and at least one fastening member, wherein
the fiber array unit is located on a side of the chip, and the fiber array unit comprises at least one optical fiber;
at least one waveguide is disposed on a surface of the chip, and matching glue is filled between an end face of the waveguide and an end face of the optical fiber;
one end of the fastening member is bonded to the chip by using fastening glue, and the other end is bonded to the fiber array unit by using the fastening glue; and
bonding strength of the fastening glue is greater than bonding strength of the matching glue.

2. The optical component according to claim 1, wherein the fastening glue and the matching glue that are bonded to the fiber array unit are located on different surfaces of the fiber array unit; and the fastening glue and the matching glue that are bonded to the chip are located on different surfaces of the chip.

3. The optical component according to claim 2, wherein the fastening member is located on a same side of the chip and the fiber array unit; and
the end of the fastening member is bonded to the surface of the chip, the other end is bonded to a first surface of the fiber array unit, and the first surface of the fiber array unit is parallel to the surface of the chip.

4. The optical component according to claim 3, wherein a part of the fiber array unit exceeds the surface of the chip; and
a first thickness of the fastening member is greater than a second thickness of the fastening member, wherein the first thickness is a thickness, in a first direction, of the end that is of the fastening member and that is bonded to the chip, the second thickness is a thickness, in the first direction, of the end that is of the fastening member and that is bonded to the fiber array unit, and the first direction is a direction perpendicular to the surface of the chip.

5. The optical component according to claim 2, wherein the fastening member is located on different sides of the chip and the fiber array unit; and
the end of the fastening member is bonded to the surface of the chip, the other end is bonded to a second surface of the fiber array unit, and the second surface of the fiber array unit is not parallel to the surface of the chip.

6. The optical component according to claim 5, wherein a first width of the fastening member is greater than a second width, wherein the first width is a width, in a second direction, of the end that is of the fastening member and bonded to the fiber array unit, the second width is a width, in the second direction, of the end that is of the fastening member and bonded to the chip, and the second direction is a direction perpendicular to an extension direction of the fiber array unit and parallel to the surface of the chip.

7. The optical component according to claim 1, wherein the fastening member is located on the surface of the chip at a position corresponding to the fiber array unit; and
a part of an end face of the fiber array unit facing the chip is bonded to the fastening member, and another part is bonded to a side face of the chip by using the fastening glue.

8. The optical component according to any one of claims 1 to 7, wherein the fiber array unit comprises a first protection board and a second protection board, and each optical fiber in the fiber array unit is located between the first protection board and the second protection board;
the optical fiber in the fiber array unit is flush with the waveguide on the surface of the chip;
the first protection board is located on a side that is of the optical fiber and that is away from the chip, and the second protection board is located on a side that is of the optical fiber and that is close to the chip; and
the end of the fastening member is bonded to the chip by using the fastening glue, and the other end is bonded to a side face of the first protection board by using the fastening glue.

9. The optical component according to any one of claims 1 to 8, wherein a material of the fastening member comprises glass.

10. The optical component according to any one of claims 1 to 9, wherein the matching glue comprises silicone, and the fastening glue comprises epoxy glue.

11. An optical module, comprising: the optical component according to any one of claims 1 to 10 and a housing, wherein the housing wraps the optical component.

12. A communication device, comprising: the optical module according to claim 11 and a power module, wherein the power module is configured to supply power to the optical module; or the communication device comprises: the optical component according to any one of claims 1 to 10 and a housing, wherein the housing wraps the optical component.
